# EUROPÄISCHE PATENTANMELDUNG

(11) **EP 0 563 583 A1**
(43) Veröffentlichungstag der Anmeldung: **06.10.1993**
(21) Anmeldenummer: 93103171.0
(22) Anmeldetag: 27.02.1993
(51) Int. Cl.: H02K 7/08, E05F 15/16

(54) **Motorantrieb,insbesondere elektromotorischer Fenster- oder Schiebedachantrieb**

(30) Priorität: 28.03.1992 DE 4210302
(71) Anmelder: Licentia Patent-Verwaltungs-GmbH, D-60596 Frankfurt (DE)
(72) Erfinder: Traeger, Friedrich, Dipl.-Ing., W-1000 Berlin 27 (DE)
(74) Vertreter: Vogl, Leo, Dipl.-Ing.

(57) **Zusammenfassung**

Bei einem KFZ-Fensterantrieb mit einem Elektromotor und daran gekoppeltem Getriebe soll auf einfache Weise sowohl eine Begrenzung des Axialspiels der durchgehenden Motor-Getriebewelle (9) als auch der Durchbiegung des freien Wellenendes der Motor-Getriebewelle (9) mit der darauf befestigten Getriebeschnecke (17) im Lastbetrieb erreicht werden. Um eine Dämpfung der Axialbewegung der Motor-Getriebewelle (9) bei Drehrichtungsumkehr zu erzielen, wird vorgeschlagen, daß das freie Ende der Getriebeschnecke (17) mit einem angeformten Lagerzapfen (21) in einer Sacklochbohrung (23) eines axial abgefederten Stützteiles (25) lagert, welches in einer Sackausnehmung (27) des Getriebegehäuses (29) radial und axial zusammen mit der Motor-Getriebewelle (9) begrenzt bewegbar angeordnet ist. Der Getriebemotor zeichnet sich durch einen einfachen Aufbau, eine einfache Montage und durch einen geräuscharmen Lauf aus.

## Beschreibung

Die Erfindung bezieht sich auf einen Getriebemotor, insbesondere elektromotorischen Fensterantrieb der im Oberbegriff des Patent-anspruchs 1 angegebenen Art.

Bei einem aus der DE-GM 19 46 380 bekannten Wischermotor sind zur Lagerung der Ankerwelle zwei Kalottenlager vorgesehen, von denen das eine das motorseitige Wellenende führt, während das andere zwischen Ankerwicklung und Schneckenverzahnung im Getriebegehäuse festgelegt ist. Das gegenüberliegende Wellenende stützt sich ohne jede seitliche Führung an einer Einstellschraube im Getriebegehäuse ab. Bei dieser Ausführung kann also das abtriebsseitige Wellenende bei großer Belastung seitlich ausweichen. Dadurch können die Zahnflanken beschädigt werden. Um diesen Nachteil wenigstens in Grenzen zu halten, müßte die Welle gehärtet sein, was aber das Antriebsaggregat wesentlich verteuern würde. Außerdem kann ein bestimmtes Axialspiel der Motor-Getriebewelle nach der Montage nicht immer gewährleistet werden.

Eine weiter verbesserte Anordnung zur Begrenzung des Axialspiels einer Motor-Getriebewelle eines Fensterantriebes ist durch die DE-OS 31 50 572 bekannt. Hierbei ist zur Begrenzung des Axialspiels der Motor-Getriebewelle vor dem getriebeseitigen Wellenende eine in das Getriebegehäuse einschraubbare Justierschraube vorgesehen, auf die stirnseitig eine Anlauffläche der Motor-Getriebewelle anlaufen kann. Das zwischen der Anlauffläche der Motorgetriebewelle einerseits und der Anlauffläche der Justierschraube andererseits gegebene Axialspiel kann durch Drehen der Justierschraube vergrößert bzw. verkleinert werden. Eine Sicherung der Justierschraube in der ein bestimmtes Axialspiel gewährleistenden Einstellung ist nach dem Einstellvorgang unumgänglich.

Weiterhin ist durch die EP 75 777 ein Getriebemotor für einen Fensterheberantrieb bekannt, bei dem die Motorgetriebewelle beiderseits des Rotors in Kalottenlagern gelagert ist. Um hierbei beim Betrieb die Durchbiegung des freien Wellenendes der verlängerten Motor-Getriebewelle mit der Schnecke möglichst gering zu halten und somit die Welle gegen Bruch zu sichern, ist ein zusätzliches Stützlager in dem Getriebegehäuse vorgesehen, gegen das sich das unter Last befindliche verlängerte Wellenende der Welle anlegen und abstützen kann. Das Axialspiel der Motor-Getriebewelle ist hierbei durch eine von außen zugängliche Einstellschraube in dem Getriebegehäuse einstellbar, welche auf die Stirnfläche des Wellenendes direkt einwirkt. Hierbei ist nach der Axialeinstellung der Motor-Getriebewelle noch eine Fixierung der Einstellschraube erforderlich.

Die bekannten Getriebemotoren für Fensterheberantriebe haben den Nachteil, daß sie insbesondere bei Drehrichtungsumkehr des Getriebemotors nicht geräuscharm arbeiten, da immer noch ein Restaxialspiel vorhanden ist.

Der Erfindung liegt die Aufgabe zugrunde, einen Getriebemotor, insbesondere einen elektromotorischen Fensterantrieb oder Schiebedachantrieb mit einem Schneckengetriebe zu schaffen, der bei einfacher Fertigung und Montage mit einer vereinfachten Möglichkeit zur Begrenzung der Durchbiegung des freien Wellenendes unter Last und des Axialspiels der Motor-Getriebewelle geräuscharm arbeitet. Diese Aufgabe wird durch die im Patentanspruch 1 gekennzeichnete Erfindung gelöst.

Der erfindungsgemäße Getriebemotor ermöglicht eine einfache Dämpfung der Axialbewegung der Motor-Getriebewelle bei Änderung der Motordrehrichtung, wobei das Axialspiel durch eine einfach herzustellende und zu montierende Axialbegrenzungsvorrichtung einstellbar ist. Ein bei den bekannten Getriebemotoren erforderliches Gewindeschneiden für die Einstellschraube in dem Getriebegehäuse ist nicht mehr erforderlich. Durch die Druckfeder und das aus Kunststoff bestehende Stützteil ist eine wirkungsvolle Dämpfung gegeben.

Weitere vorteilhafte Ausgestaltungen des Erfindungsgegenstandes sind den weiteren Unteransprüchen zu entnehmen.

Die Erfindung wird anhand eines Ausführungsbeispiels im folgenden näher beschrieben. Es zeigen:
- Figur 1: einen Längsschnitt durch einen FensterhebeGetriebemotor,
- Figur 2: das getriebeseitige Ende der Motor-Getriebewelle mit dem Stützteil und
- Figur 3: eine Einzelheit aus Figur 2 im Querschnitt.

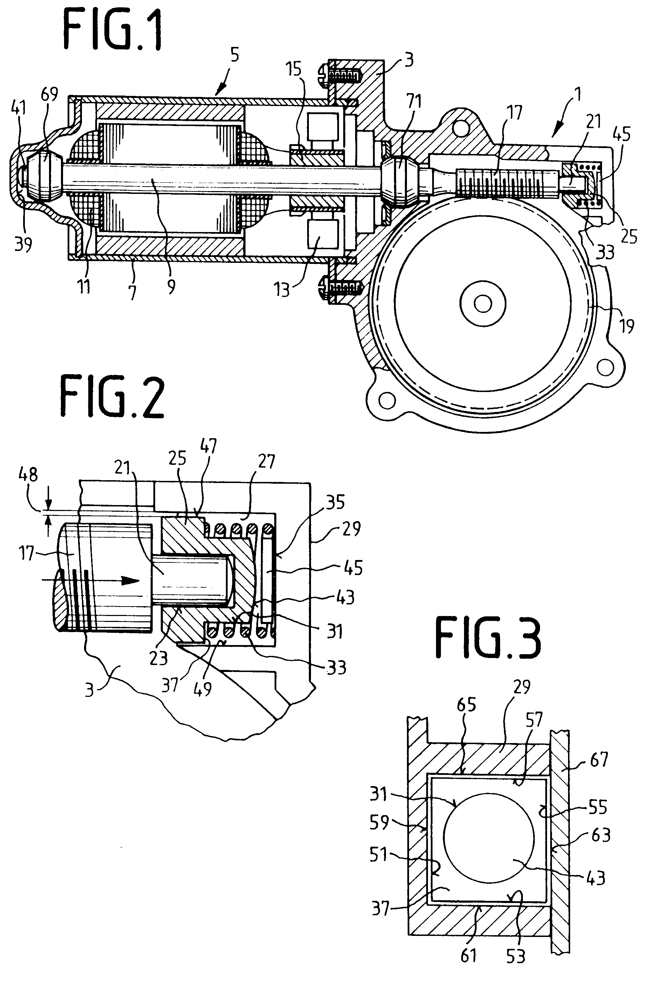

Der in Figur 1 dargestellte Fensterhebe-Getriebemotor 1 für ein Kraftfahrzeug besteht im wesentlichen aus einem halbschaligen Getriebegehäuse 3 und einem an dessen linker Seite angeflanschten elektrischen Antriebsmotor 5 in einem Gehäuse 7. In das halbschalenförmige Getriebegehäuseteil 3 ragt die gemeinsame Motor-Getriebewelle 9, die an ihrem motorseitigen Ende einen Rotor 11 und einen von einem Bürstensystem 13 geschliffenen Kommutator 15 aufnimmt und an ihrem rechten Wellenende eine Schnecke 17 aufnimmt, die mit einem Schneckenrad 19 betriebsmäßig in Eingriff steht. Dieses Schneckenrad 19 ist in hier nicht dargestellter Weise mit weiteren Antriebsmitteln, insbesondere einer Seilscheibe eines Seilzug-Fensterhebers gekuppelt. Das rechte freie Ende der Getriebeschnecke 17 weist einen angeformten Lagerzapfen 21 auf, der in einer Sacklochbohrung 23 eines axial abgefederten Stützteiles 25 lagert. Dieses Stützteil 25 ist seinerseits in einer Sackausnehmung 27 des Getriebegehäuses 29 radial und axial begrenzt bewegbar gelagert. Weiterhin weist das abgefederte Stützteil 25 einen Lagerzapfen 31 für eine Druckfeder 33 auf, welche konzentrisch zu der Sacklochbohrung 23 angeordnet ist und sich einerseits auf dem Boden 35 der Sackausnehmung 27 in dem Getriebegehäuse 29 und andererseits an einem im Durchmesser zu dem Lagerzapfen 31 vergrößerten Bund 37 des Stützteiles 25 abstützt. Die Druckfeder 3 drückt hierbei die Motor-Getriebewelle 9 im Stillstand des Getriebemotors 1 gegen einen Anschlag innerhalb des Getriebemotors 1. Hierbei wird die Motor-Getriebewelle 9 mit ihrem linken Ende mit einem angeformten Anlaufkegel 41 gegen eine als Anschlag dienende axiale Ausbuchtung des Lagerschildes 39 gedrückt.

Die Motor-Getriebewelle 9 hebt bei Rechts lauf von dem Anschlag 39 gegen die Kraft der Druckfeder 33 ab, wobei die Axialbewegung der Motor-Getriebewelle 9 durch Anschlagen des eine Anschlagfläche 43 an dem freien Ende des Stützteiles 25 gegen den Boden 35 der Sackausnehmung begrenzbar ist. In vorteilhafter Ausgestaltung weist die Anschlagfläche 43 an dem Stützteil 25 eine konvex ausgebildete Oberfläche auf, wobei eine oder mehrere Ausgleichsscheiben 45 zwischen dem Boden 35 der Sackausnehmung 27 und der Anschlagfläche 43 an dem Stützteil 25 einlegbar sind. Durch Auswahl der Dicke dieser Ausgleichsscheiben 45 ist das Axialspiel der Motor-Getriebewelle 9 einfach einstellbar. Die Zentrierung der Ausgleichsscheiben 45 übernimmt die Druckfeder 33, welche die Ausgleichsscheiben 45 radial umgibt. Hierzu sind die Außendurchmesser der Ausgleichsscheiben 45 kleiner als der Innendurchmesser der Druckfeder 33 ausgebildet. Um eine gute Dämpfung zu erzeugen, bestehen die Ausgleichsscheiben 45 und/oder das Stützteil 25 entweder aus Kunststoff oder einem geeigneten Sintermaterial.

Die Motor-Getriebewelle 9 ist übrigens über Kalottenlager 69, 71 in dem Motorgehäuse 7 bzw. Getriebegehäuse 29 gelagert. Sämtliche Teile des Getriebemotors 1 sind in das halbschalige Getriebe-Gehäuseteil 3 des Getriebegehäuses 29 einlegbar, das abschließend durch einen Deckelteil 67 verschließbar ist. Hierbei sind auch die Einzelteile der Axialbegrenzungsvorrichtung zum Einstellen des Axialspiels einfach in das Getriebe-Gehäuseteil 3 einlegbar. In vorteilhafter Weise ist hierbei vorgesehen, daß nach der Montage der Motor-Getriebewelle 9 in dem Getriebe-Gehäuseteil 3 das jeweilige Axialspiel gemessen, aus dem Vergleich zwischen Ist-Axialspiel und Soll-Axialspiel der definierte Abstand zur Begrenzung des Axialspiels berechnet wird und danach eine oder mehrere Ausgleichsscheiben 45 mit einer entsprechenden dicken Stärke ausgesucht und eingesetzt werden.

In weiterer vorteilhafter Ausgestaltung übernimmt die Druckfeder 33 die Sicherung der Ausgleichsscheiben 45, so daß zusätzliche Teile hierfür nicht erforderlich sind. Der Getriebemotor 1 zeichnet sich aufgrund der dämpfend wirkenden Einzelteile der Axialbegrenzungsvorrichtung durch eine hohe Geräuscharmut auch bei Drehrichtungsumkehr des Getriebemotors 1 aus. Zum Aufnehmen des Stützteiles 25 und der Druckfeder 33 braucht das Getriebegehäuseteile 3 nicht zusätzlich bearbeitet werden. Übrigens taucht das Stützteil 25 mit Radialspiel in die Sackausnehmung 27 hinein wodurch die Durchbiegung der Motor-Getriebewelle 9 auf einfachste Weise begrenzbar ist. Zu diesem Zweck ist die Außenumfangsfläche des Bundes 37 an dem Stützteil 25 als Anschlagfläche 47 ausgebildet, durch welche die Durchbiegung des freien Endes der Motor-Getriebewelle 9 durch Anschlagen gegen die Innenflächen 49 der Sackausnehmung 27 begrenzbar ist. In Ruhestellung der Motor-Getriebewelle 9 ist ein Luftspalt 48 zwischen dem Bund 37 und der Sackausnehmung 27 allseitig vorhanden. Um ein Verdrehen des Stützteiles 25 zu verhindern, weist der Bund 37 an dem Stützteil 25 eine quadratische Außenform mit vier Anschlagflächen 51, 53, 55, 57 auf, welche entsprechend ausgebildeten Innenflächen 59, 61, 3, 65 der Sackausnehmung 27 im Stillstand des Getriebemotors 1 mit Spiel gegenüberliegen.

Hierbei liegt die Innenfläche 63 dem die Sackausnehmung 27 verschließbaren Deckel 67 gegenüber.

## Patentansprüche

1. Getriebemotor, insbesondere elektromotorischer Fensterheberantrieb, mit einem in das Innere des Getriebegehäuses ragenden freien Wellenende einer Motor-Getriebewelle, auf der eine mit einem Getriebeschneckenrad in Eingriff stehende Getriebeschnecke befestigt ist und dessen Durchbiegung bei Last durch ein im Getriebegehäuse gehaltenes Stützlager sowie dessen Axialspiel durch eine im Getriebegehäuse angeordnete Axialbegrenzungsvorrichtung begrenzbar ist, **dadurch gekennzeichnet,** daß das freie Ende der Getriebeschnecke (17) mit einem angeformten Lagerzapfen (21) in einer Sacklochbohrung (23) eines axial abgefederten Stützteiles (25) lagert, welches in einer Sackausnehmung (27) des Getriebegehäuses (29) radial und axial zusammen mit der Motor-Getriebewelle (9) begrenzt bewegbar angeordnet ist.

2. Getriebemotor nach Anspruch 1, **dadurch gekennzeichnet,** daß das abgefederte Stützteil (25) einen Lagerzapfen (31) für eine Druckfeder (33) aufweist, welche konzentrisch zu der Sacklochbohrung (23) angeordnet ist und sich einerseits auf dem Boden (35) der Sackausnehmung (27) in dem Getriebegehäuse (29) und andererseits an einem im Durchmesser zu dem Lagerzapfen (31) vergrößerten Bund (37) des Stützteiles (25) abstützt.

3. Getriebemotor nach Anspruch 1 oder 2, **dadurch gekennzeichnet,** daß die Druckfeder (33) die Motor-Getriebewelle (9) im Stillstand des Getriebemotors (1) gegen einen Anschlag innerhalb des Getriebemotors (1) drückt.

4. Getriebemotor nach Anspruch 3**, dadurch gekennzeichnet,** daß die Motor-Getriebewelle (9) bei Rechtslauf von dem Anschlag (39) gegen die Kraft der Druckfeder (33) abhebt, wobei die Axialbewegung der Getriebe-Motorwelle (9) durch Anschlagen des eine Anschlagfläche (43) an dem freien Ende des Stützteiles (25) gegen den Boden (35) der Sackausnehmung (27) begrenzbar ist.

5. Getriebemotor nach Anspruch 4**, dadurch gekennzeichnet,** daß die Anschlagfläche (43) an dem Stützteil (25) eine konvex ausgebildete Oberfläche aufweist.

6. Getriebemotor nach Anspruch 4 oder 5, **dadurch gekennzeichnet,** daß ein oder mehrere Ausgleichsscheiben (45) zwischen dem Boden (35) der Sackausnehmung (27) und der Anschlagfläche (43) an dem Stützteil (25) einlegbar sind.

7. Getriebemotor nach Anspruch 6**, dadurch gekennzeichnet,** daß die Ausgleichsscheiben (45) nach der Montage durch die Druckfeder (33) radial zentrierbar sind.

8. Getriebemotor nach Anspruch 7, **dadaurch gekennzeichnet,** daß die Außendurchmesser der Ausgleichsscheiben (45) kleiner als der Innendurchmesser der Druckfeder (33) sind.

9. Getriebemotor nach Anspruch 6, 7 oder 8, **dadurch gekennzeichnet,** daß die Ausgleichsscheiben (45) und/oder das Stützteil (25) aus Kunststoff oder Sintermaterial bestehen.

10. Getriebemotor nach Anspruch 1 oder 2**, dadurch gekennzeichnet,** daß das Stützteil (25) mit radialem Spiel in die Sackausnehmung (27) hineintaucht.

11. Getriebemotor nach Anspruch 1, 2 oder 10, **dadurch gekennzeichnet,** daß die Außenumfangsfläche des Bundes (37) an dem Stützteil (25) als Anschlagfläche (47) ausgebildet ist, durch welche die Durchbiegung des freien Endes der Motor-Getriebewelle (9) durch Anschlagen gegen die Innenflächen (49) der Sackausnehmung (27) begrenzbar ist.

12. Getriebemotor nach Anspruch 11, **dadurch gekennzeichnet,** daß der Bund (37) an dem Stützteil (25) eine quadratische Außenform mit vier Anschlagflächen (51, 53, 55, 57) aufweist, welche entsprechend ausgebildeten Innenflächen (59, 61, 63, 65) der Sackausnehmung (27) im Stillstand des Getriebemotors (1) mit Spiel gegenüberliegen.
